# EUROPÄISCHE PATENTSCHRIFT

(11) **EP 1 448 678 B1**
(45) Veröffentlichungstag und Bekanntmachung des Hinweises auf die Patenterteilung: **15.04.2009**
(21) Anmeldenummer: 02778965.0
(22) Anmeldetag: 03.10.2002
(51) Int. Cl.: C08J 3/12, C08F 265/10, C08F 265/04, C08F 257/02, C08F 263/04, C09D 151/00, C09D 5/00

(54) **SPRÜHGETROCKNETE DISPERSIONEN, VERFAHREN ZU IHRER HERSTELLUNG UND DEREN ANWENDUNG**
SPRAY-DRIED DISPERSIONS, METHOD FOR THE PRODUCTION THEREOF AND USE OF THE SAME
DISPERSIONS SECHEES PAR PULVERISATION, LEUR PROCEDE DE PRODUCTION ET LEUR UTILISATION

(30) Priorität: 11.10.2001 AT 16032001
(43) Veröffentlichungstag der Anmeldung: 25.08.2004
(73) Patentinhaber: BASF SE, 67056 Ludwigshafen (DE)
(72) Erfinder: MAYER, Gerald, A-1210 Wien (AT); AXMANN, Heinz, A-3400 Klosterneuburg (AT)
(86) Internationale Anmeldenummer: PCT/AT2002/000285
(87) Internationale Veröffentlichungsnummer: WO 2003/031500

(56) Entgegenhaltungen:
- WO-A-00/01757
- WO-A-97/38042
- WO-A-98/13411
- GB-A- 962 458
- US-A- 4 142 013

## Beschreibung

Die vorliegende Erfindung bezieht sich auf sprühgetrocknete Dispersionen, die auch als redispergierbare Trockendispersionen bezeichnet werden. Darunter versteht man pulverförmige, redispergierbare Bindemittel, die sich durch einfaches Einrühren in Wasser in eine gebrauchsfähige Form überführen lassen.

In der WO987.3411 (entspricht der AT403914B) werden redispergierbare sprühgetrocknete Dispersionen beschrieben, die als Coatingmittel einen Überzug aus einem amphoteren Polymer aufweisen. Amphotere Polymere sind Makrozwitterionen, die bei dem Sprühtrocknungsprozeß sowohl positive als auch negative Ladungen in einem Makromolekül enthalten. Der Kern des sprühgetrockneten Pulvers, der nach dem Verfahren des AT-Patentes gecoatet wird, besteht aus einem Emulsionspolymerisat auf Basis Vinylacetat, Styrol, Acrylsäureester und deren Copolymeren. Ferner sind aus GB962458 gebundene non-woven-Faserprodukte bekannt, in deren Bindemittel als Copolymerkomponente u.a. N-Methylolacrylamid und/oder N-Methylolmethacrylamid vorliegt.

Das aus AT403914 bekannte Verfahren ermöglicht die Überführung von Polymeren mit niedriger Glasumwandlungstemperatur in einen klebfreien Zustand mit nur geringen Mengen an Überzugs- oder Coatingmittel. Bei einer Kombination dieser sprühgetrockneten Dispersionen mit Zement können hochflexible, rißüberbrückende Beschichtungen ausgebildet werden.

In der Praxis zeigt sich allerdings, daß die zum Redispergieren der sprühgetrockneten Dispersionen erforderliche Zeit für eine dem Anwender gewohnte Arbeitspraxis zu lange erscheint. Dies ist möglicherweise darauf zurückzuführen, daß das Coatingmittel des sprühgetrockneten Dispersionspulvers in wäßrigem Medium zu rasch anquillt. Als Coatingmittel werden in der AT-Patentschrift amphotere Polymere mit einer mindestens über Zimmertemperatur liegenden Glasumwandlungstemperatur genannt. Unter amphoteren Polymeren werden darin Polymere verstanden, die in Form eines Makrozwitterions vorliegen und in der gleichen Kette sowohl positive als auch negative Ladungen aufweisen. Der isoelektrische Punkt ist dann erreicht, wenn die positiven und negativen Ladungen in einem solchen Makrozwitterion gleich groß sind. Vorzugsweise soll die Glasumwandlungstemperatur im Bereich von 50°C bis über 130°C liegen. Als amphotere Polymere mit hoher Glasumwandlungstemperatur kommen synthetische Polymere wie auch natürliche Polymere in Betracht, wobei als natürliche Polymere Polysaccharide, vorzugsweise Stärken, und Proteine, insbesondere Casein, Weizenprotein bzw. ein Natriumsalz hievon zum Einsatz gelangen.

Die vorliegende Erfindung stellt sich zur Aufgabe, neue sprühgetrocknete Dispersionen und ein Verfahren zu deren Herstellung anzugeben, wobei sich die sprügetrockneten Dispersionen durch eine nochmals verbesserte Redispergierbarkeit auszeichnen.

Dieses Ziel wird erfindungsgemäß durch redispergierbare sprühgetrocknete Dispersionen gemäß Anspruch 1 erreicht. Die Überzugsbildung erfolgt in der Nähe oder am isoelektrischen Punkt des Coatingmittels (+/- 3 bis +/- 1) und das gecoatete Polymer enthält funktionelle Gruppen, die im alkalischen Bereich, wie er beispielsweise in Zementabmischungen vorliegt, ein Abstoßungspotential zu dem Coatingmittel ergeben, und zwar auf Grund des Vorhandenseins gleicher Ladungen. Beispielsweise kann das Polymer Carboxylgruppen enthalten und das Coatingmittel Aminogruppen, die im sauren Bereich positiv geladen sind, sowie Carboxylgruppen, die so wie jene des Polymers im sauren Bereich schwach dissoziiert sind, das heißt nur gering negativ geladen sind. Im alkalischen Bereich liegen die Aminogruppen dann, soferne sie nicht quaternisiert sind, das heißt wenn es sich um primäre, sekundäre oder tertiäre Aminogruppen handelt, im ungeladenen Zustand vor, wogegen die negativ geladenen Carboxylgruppen vorwiegend im dissoziierten Zustand vorliegen. Daraus ergibt sich ein Abstoßungspotential und dadurch eine verbesserte Redispergierbarkeit.

Überraschenderweise konnte gefunden werden, daß durch gezieltes Modifizieren des Polymers mit langkettigen Alkoholen, die als Abstandhalter und/oder als Hydrophobierungsmittel dienen, die Redispergierbarkeit beim Abmischen mit zementären Zusammensetzungen verbessert werden konnte.

Die Modifikation des Emulsionspolymerisats auf der Basis Vinylacetat, Styrol, Acrylsäureester und deren Copolymeren kann beispielsweise durch den Einbau von N-methylolfunktionellen Monomeren als zusätzlicher Monomerbaustein erfolgen. In einem zweiten Schritt werden die N-Methylolgruppen mit langkettigen Alkoholen (beispielsweise Tridecylalkohol, Laurylalkohol, C₁₂-C₃₀) verethert. Diese modifizierten Polymere ergeben neben der verbesserten Redispergierbarkeit auch eine weiter verbesserte Wasserfestigkeit der mit ihnen hergestellten Beschichtungen.

Der Auswahl des amphoteren Überzugsmittels kommt besondere Bedeutung zu. Es soll in der oben beschriebenen Weise als Coatingmittel wirksam sein und darüber hinaus in der Endformulierung weitgehend unlöslich sein bzw. einen geringen Quellungsgrad in Wasser aufweisen. Dies kann durch Ausbildung unlöslicher Salze mit Carboxylgruppen des amphoteren Überzugsmittels erreicht werden.

In diesem Zusammenhang hat es sich als besonders vorteilhaft erwiesen, als amphoteres überzugsmittel ein derivatisiertes Sojaprotein zu verwenden, das gegenüber dem natürlichen Sojaprotein durch einen erhöhten Gehalt an Carboxylgruppen und/oder Sulfonsäuregruppen charakterisiert ist. Ein erfindungsgemäß bevorzugt eingesetztes carboxyliertes Sojaprotein hat einen isoelektrischen Punkt bei ca. 3,8. Zum Vergleich sei angeführt, daß Casein einen isoelektrischen Punkt bei ca. 4,5 aufweist.

Im Sprühtrocknungsvorgang kann das carboxylierte Sojaprotein in einem Ausmaß von 2 bis 10 Gew.-%, bezogen auf Festkörper des eingesetzten Emulsionspolymers mit niedriger Glasumwandlungstemperatur, angewendet werden.

Zur Gewinnung der erfindungsgemäßen redispergierbaren Trockendispersionen wird die aus der Emulsionspolymerisation erhaltene Dispersion mit einer Lösung des carboxylierten Sojaproteins versetzt und in einem Sprühturm in an sich bekannter Weise zu einem feinteiligem Pulver sprühgetrocknet.

Die Wasseraufnahme von fertigen, zementhaltigen Beschichtungen kann in an sich bekannter Weise durch Zusatz von vernetzenden Substanzen, wie z.B. Metallsalzen, beispielsweise Zirkonium- oder Zinksalzen, zu den sprühgetrockneten Pulvern modifiziert werden.

Die nachfolgenden Beispiele sollen den Gegenstand der Erfindung weiter erläutern, ohne ihn jedoch einzuschränken.

### BEISPIEL 1: Herstellung des Emulsionspolymerisats, Zusatz des carboxylierten Sojaproteins und Sprühtrocknung zur Trockendispersion

### a) Herstellung des Emulsionspolymers

Es wurde ein carboxylgruppenhaltiges und N-methylolfunktionelles Polymer nach bekannten Emulsionspolymerisationsverfahren hergestellt, wobei die Glasübergangstemperatur des Polymers etwa -25°C betrug. Dies wurde durch geeignete Auswahl der Monomere erreicht. Als Monomermischung kam in diesem Beispiel folgende Zusammensetzung zum Einsatz: Styrol 31 Gew. %, 2-Ethylhexyacrylat 66,5 Gew. %, N-Methylolacrylamid 0,5 Gew. %, sowie Acrylsäure 1 Gew.%.

Dabei kam als Emulgator ein Gemisch von anionischen und nichtionogenen oberflächenaktiven Substanzen zum Einsatz, wobei die anionischen Emulgatoren auf ethoxylierten Fettalkoholsulfaten und die nichtionogenen Emulgatoren auf ethoxylierten Fettalkoholen basierten. Die eingesetzte Menge des Gemisches betrug 3 Teile fester Emulgator auf 100 Teile der Monomermischung.

Wesentlich bei der Reaktionsführung ist, daß ein frühzeitiges Reagieren der N-Methylolgruppen vermieden wurde, und zwar durch gezieltes Einstellen des pH-Wertes und der Reaktionstemperatur. Der pH-Wert wurde demzufolge zwischen 4,5 und 5 gehalten, die Reaktionstemperatur wurde unter Ausnutzung eines geeigneten Redoxsystems auf 60-65°C gehalten. Der Puffer in diesem Beispiel war Natriumbicarbonat, kombiniert mit Diammoniumhydrogenphosphat; das Redoxsystem war eine Kombination von Kaliumperoxodisulfat mit dem Reduktionsmittel Natriummetabisulfit.

Um die Temperaturbelastung des N-Methylolacrylamids gering zu halten, wurde das Monomer als letzte Monomerkomponente zugegeben. Die gesamte Reaktionszeit betrug 4 Stunden für die Polymerisation sowie anschließend 2 Stunden für die Nachreaktion.b) Hydrophobierung des Polymers

Die erfindungsgemäße Hydrophobierung wurde im Anschluß an das Polymerisationsverfahren durchgeführt. Dabei wurden die N-Methylolgruppen mit dem langkettigen Alkohol Isotridecanol bei 60-65°C während ca. 30 Minuten umgesetzt. Als ebenfalls geeignete Alkohole erwiesen sich unter anderem Laurylalkohol und Stearylalkohol.

### c) Coatingverfahren

Das eingesetzte Sojaproteinat hatte einen folgenden typischen Gehalt an funktionellen Gruppen:

| | |
|---|---|
| Amine (prim, sek, tert.) | 116 Mol / 100 kg |
| Carboxyl (-COOH) | 130 Mol / 100 kg |
| Hydroxyl (-OH) | 56 Mol / 100 kg |
| Hydroxyphenyl | 23 Mol / 100 kg |
| Sulfhydryl (-SH) | 6 Mol / 100 kg |

Das eingesetzte Proteinat hatte aufgrund seiner spezifischen Zusammensetzung der Aminosäurenbausteine einen isoelektrischen Punkt zwischen pH 3,0 und 4,0.

Obiges Sojaproteinat wurde in Form des Ammoniumsalzes eingesetzt, wobei der pH-Wert vor der Verwendung mit Natronlauge auf 9,5 eingestellt wurde.

243g einer 10 %igen Ammoniumsojaproteinatlösung wurden hergestellt und in diese wurden unter starkem Rühren 717g der auf 34 Gew.% verdünnten hydrophobierten EmulsionspolymerDispersion eingebracht. Dieses entspricht einem Verhältnis von 10 Gew.Teilen Polymer zu 1 Gew. Teil Sojaproteinat.

Die fertige Mischung wurde noch eine halbe Stunde weiter gerührt, um eine homogene Verteilung zu erzielen. Im Anschluß wurde der pH-Wert der Mischung langsam unter Rühren mit 24g 5%iger Schwefelsäure auf 4,5 abgesenkt, wodurch die Nähe des isoelektrischen Punktes erreicht wurde. Diese Lösung wurde dann sprühgetrocknet.

### d) Sprühtrocknung

Die nach Beispiel 1 a-c hergestellte Sprühlösung wurde nach bekannten Verfahren einer Sprühtrocknung unterworfen, wobei das Rotationsverfahren angewendet wurde, aber auch das Düsenverfahren geeignet ist. Als Trägermaterial wurde ein Talkumpulver mit einer mittleren Teilchengröße von 1,2 µm eingesetzt. Als Trägermaterial ebenfalls geeignet erwiesen sich feinteilige anorganische, nichtreaktive, vorzugsweise hydrophobierte Materialien wie Magnesiumcarbonat, Quarzmehl, Polykieselsäuren, Bariumsulfat etc., wobei es vorteilhaft ist, wenn durch die chemische Beschaffenheit des Trägermaterials der pH-Wert der Sprühflotte nicht erhöht wird. Dies gewährleistet die erfindungsgemäße Nähe der Sprühflotte zum isoelektrischen Punkt.

Es wurde ein gut rieselfähiges Pulver enthalten (PULVER 1).

### BEISPIEL 2

Wie Beispiel 1; als Coatingmittel wurde hingegen ein Natiumcaseinat verwendet. Der isoelektrische Punkt von Casein liegt bei ca. 4,5. Es wurde ein pH-Wert von ca. 5 eingestellt, das Verhältnis Polymer zu Caseinat war 91,8 Gew. Teile Polymer zu 8,2 Gew. Teilen Caseinat.

Es wurde ein gut rieselfähiges Pulver erhalten (PULVER 2).

### BEISPIEL 3

Wie Beispiel 1; als Coatingmittel wurde hingegen ein Weizenproteinat verwendet. Der isoelektrische Punkt des Weizenproteinates lag bei ca. 4,5. Es wurde ein pH-Wert von ca. 5 eingestellt, das Verhältnis Polymer zu Proteinat war 85 Gew. Teile Polymer zu 15 Gew. Teilen Proteinat.

Es wurde ein gut rieselfähiges Pulver erhalten (PULVER 3).

### BEISPIEL 4

Wie Beispiel 1, jedoch wurde die Sprühtrocknung bei einem pH-Wert der Sprühflotte von 7,0 durchgeführt.

Es wurde ein gut rieselfähiges Pulver erhalten (PULVER 4).

### BEISPIEL 5

Wie Beispiel 2, jedoch wurde die Sprühtrocknung bei einem pH-Wert der Sprühflotte von 8,5 durchgeführt.

Es wurde ein gut rieselfähiges Pulver erhalten (PULVER 5).

### BEISPIEL 6

Wie Beispiel 3, jedoch wurde die Sprühtrocknung bei einem pH-Wert der Sprühflotte von 8,5 durchgeführt.

Es wurde ein gut rieselfähiges Pulver erhalten (PULVER 6).

### BEISPIEL 7

Mit den Polymerpulvern nach den Beispielen 1-6 wurden Standardmörtelmischungen nach folgender Rezeptur bereitet und mit Wasser auf jeweils gleiche Verarbeitungsviskosität von 50.000 mPas eingestellt (Brookfield RVT, Spindel 7/20 rpm, max. Viskosität während der Rotation). Die notwendige Wassermenge wird als Wasserbedarf bezeichnet. Weiters wurde die Zeit bestimmt, die benötigt wurde, um aus der zunächst krümeligen Konsistenz eine homogene flüssige Mischung zu erhalten. Diese Zeit wird als Redispergierzeit bezeichnet.

| | |
|---|---|
| 130 g | Quarzsand 0,1-0,3 mm |
| 70 g | Weißzement PZ 42,5 |
| 40 g | Polymerpulver |
| 1 g | Betonverflüssiger |

Die erhaltenen Werte sind in folgender Tabelle zusammengefasst:

| Pulver aus Beispiel | Wasserbedarf | Redispergierzeit |
|---|---|---|
| 1 | 33 g | 30 Sekunden |
| 2 | 54 g | 90 Sekunden |
| 3 | 50 g | 70 Sekunden |
| 4 | 40 g | 60 Sekunden |
| 5 | 80 g | 120 Sekunden |
| 6 | 70 g | 100 Sekunden |

### BEISPIEL 8

Es wurden die gleichen Polymerpulver von den Beispielen 1 - 6 wie folgt auf Ihre Blockungsneigung geprüft:

100g Pulver wurden mit 7g Glimmer der Handelsbezeichnung Plastorit 0000 gemischt.

50 g der Mischung wurden in einen Hohlzylinder mit einem Innendurchmesser von 5 cm gebracht und mit einem Stahlzylinder mit einem Durchmesser von 4,9 cm und einem Gewicht von 2 kg belastet. Diese Belastung entspricht einem Druck von 330 g/cm². Nach einer Zeit von einer Woche wurde das Gewicht entfernt und die Blockungsneigung der Pulver nach folgenden Kriterien beurteilt:
1: rieselfähig
2: anfänglich nicht rieselfähig, zerfällt aber in rieselfähiges Pulver bei mechanischer Beanspruchung (Zerdrücken)
3: nicht rieselfähig, auch nicht nach mechanischer Beanspruchung (Blockbildung)

| Pulver aus Beispiel | Bewertung der Blockungsneigung |
|---|---|
| 1 | 1 |
| 2 | 2-3 |
| 3 | 2 |
| 4 | 3 |
| 5 | 3 |
| 6 | 3 |

### BEISPIEL 9

Aus den Mörtelmischungen aus Beispiel 7 wurden 2-3 mm starke Probekörper gefertigt. Nach einer Trocknungszeit von 21 Tagen bei Raumtemperatur wurden die Probekörper einem Zug/Dehnversuch unterworfen, sowie die Wasseraufnahme bei einer Immersion in Wasser von 7 Tagen bei Raumtemperatur bestimmt.

| Probekörper aus Pulver von Beispiel | Zugfestigkeit N/mm² | Zugdehnung % | Wasseraufnahme Gew. % |
|---|---|---|---|
| 1 | 0,6 | 60 | 19 |
| 2 | 0,55 | 57 | 22 |
| 3 | 0,5 | 61 | 24 |
| 4 | 0,6 | 60 | 19 |
| 5 | 0,3 | 30 | 30 |
| 6 | 0,4 | 40 | 28 |

### BEISPIEL 10

Das Pulver aus Beispiel 1 wurde mit 0,2 Gewichtsprozent Kaliumzirkoncarbonatpulver gemischt und dann wie in Beispiel 9 geprüft.

| Zugfestigkeit N/mm² | Zugdehnung % | Wasseraufnahme Gew. % |
|---|---|---|
| 0,64 | 55 | 15 |

Wie die obigen Beispiele zeigen, ergibt das erfindungsgemäße Polymerpulver eine wesentlich bessere Redispergierzeit, geringeren Wasserbedarf, geringere Wasseraufnahme des zementären Polymerfilms sowie bessere mechanische Werte im Zug/Dehnungsversuch.

Damit ist es möglich, einkomponentige pulverförmige Zement-Sandmischungen herzustellen, die sich unter anderem aufgrund ihrer physikalischen Eigenschaften, insbesondere der hohen Reißdehnung, für Abdichtungssysteme hinter Fliesen sowie für rißüberbrückende Betonsanierungssysteme eignen.

## Patentansprüche

1. Redispergierbare sprühgetrocknete Dispersionen auf der Basis von Emulsionspolymerisaten von Vinylacetat, Styrol, Acrylsäureestern und deren Copolymeren mit einem Überzug aus einem amphoteren Polymer, das ist ein Makrozwitterion, auf Proteinbasis, **dadurch gekennzeichnet, daß** sie ein mit langkettigen Alkoholen verethertes N-methylolgruppenhaltiges Comonomer im Emulsionspolymerisat als Kern und ein carboxyliertes und/oder sulfoniertes Sojaprotein als Überzug umfassen.

2. Dispersion nach Anspruch 1, **dadurch gekennzeichnet, daß** im Emulsionspolymerisat N-Methylolacrylamid als Comonomer vorliegt.

3. Dispersion nach Anspruch 1 oder 2, **dadurch gekennzeichnet, daß** das N-Methylolacrylamid mit einem C₁₂-C₃₀-Alkohol verethert ist.

4. Dispersion nach Anspruch 3, **dadurch gekennzeichnet, daß** das N-Methylolacrylamid mit einem Tridecylalkohol verethert ist.

5. Dispersion nach einem der Ansprüche 1 bis 4, **dadurch gekennzeichnet, daß** das Überzugsmittel einen Carboxylgruppen- und/oder Sulfonsäuregruppengehalt von 30 bis 300 Mol Carboxyl- und/oder Sulfonsäuregruppen/100 kg aufweist.

6. Dispersion nach einem der Ansprüche 1 bis 5, **dadurch gekennzeichnet, daß** das carboxylierte und/oder sulfonierte Sojaprotein einen isoelektrischen Punkt von 2 bis 6, vorzugsweise 3 bis 5 aufweist.

7. Dispersion nach einem der Ansprüche 1 bis 6, **dadurch gekennzeichnet, daß** das carboxylierte und/oder sulfonierte Sojaprotein in wasserlöslicher Form, beispielsweise als Ammoniumsalz oder als Natriumsalz, vorliegt.

8. Dispersion nach einem der Ansprüche 1 bis 7, **dadurch gekennzeichnet, daß** das Überzugsmittel aus carboxyliertem und/oder sulfoniertem Sojaprotein in einer Menge von 2 bis 10 Gew.-%, bezogen auf Festkörper des eingesetzten Emulsionspolymerisats, vorliegt.

9. Verfahren und Herstellung von redispergierbaren sprühgetrockneten Dispersionen nach einem der Ansprüche 1 bis 8, **dadurch gekennzeichnet, daß** die aus der Emulsionspolymerisation erhaltene Copolymerisatdispersion mit einer Lösung des carboxylierten und/oder sulfonierten Sojaproteins versetzt wird, der pH-Wert der Mischung auf oder in die Nähe des isoelektrischen Punktes gebracht wird und die Mischung zu einem freifließenden, staubarmen Pulver sprühgetrocknet wird.

10. Verwendung der redispergierbaren sprühgetrockneten Dispersionen nach einem der Ansprüche 1 bis 8 zur Herstellung von Trockenmischungen für Anstrich- und Beschichtungsmassen sowie, insbesondere in Kombination mit hydraulisch abbindenden Massen, zur Herstellung hochflexibler, dehnbarer, rißüberbrükkender Beschichtungen.

## Claims

1. A redispersible spray-dried dispersion based on emulsion polymers of vinyl acetate, styrene, acrylates and copolymers thereof having a coating comprising an amphoteric polymer, i.e. a macrozwitterion, based on protein, wherein said polymers comprise a comonomer etherified with long-chain alcohols and containing N-methylol groups in the emulsion polymer as a core and a carboxylated and/or sulfonated soybean protein as a coating.

2. The dispersion according to claim 1, wherein N-methylolacrylamide is present as a comonomer in the emulsion polymer.

3. The dispersion according to claim 1 or 2, wherein the N-methylolacrylamide is etherified with a C₁₂-C₃₀-alcohol.

4. The dispersion according to claim 3, wherein the N-methylolacrylamide is etherified with a tridecyl alcohol.

5. The dispersion according to any of claims 1 to 4, wherein the coating material has a carboxyl group and/or sulfo group content of from 30 to 300 mol of carboxyl and/or sulfo groups/100 kg.

6. The dispersion according to any of claims 1 to 5, wherein the carboxylated and/or sulfonated soybean protein has an isoelectric point of from 2 to 6, preferably from 3 to 5.

7. The dispersion according to any of claims 1 to 6, wherein the carboxylated and/or sulfonated soybean protein is present in water-soluble form, for example as an ammonium salt or as a sodium salt.

8. The dispersion according to any of claims 1 to 7, wherein the coating material comprising carboxylated and/or sulfonated soybean protein is present in an amount of from 2 to 10% by weight, based on solids of the emulsion polymer used.

9. A process for the preparation of redispersible spray-dried dispersions according to any of claims 1 to 8, wherein a solution of the carboxylated and/or sulfonated soybean protein is added to the copolymer dispersion obtained from the emulsion polymerisation, the pH of the mixture is brought to or close to the isoelectric point and the mixture is spray-dried to give a free-flowing, low-dust powder.

10. The use of the redispersible spray-dried dispersions according to any of claims 1 to 8 for the preparation of dry mixtures for paints and coating materials and, particularly in combination with hydraulically setting materials, for the production of highly flexible, extensible, crack-bridging coatings.

## Revendications

1. Dispersions séchées par atomisation, redispersables, à base de produits de polymérisation en mulsion d'acétate de vinyle, styrène, esters d'acide acrylique et de leurs copolymères, comportant un enrobage d'un polymère amphotère qui est un macrozwitterion à base de protéine, **caractérisées en ce qu'**elles comprennent en tant que noyau dans le produit de polymérisation en émulsion un comonomère contenant des groupes N-méthylol, éthérifié par des alcools à longue chaîne et, en tant qu'enrobage, une protéine de soja carboxylée et/ou sulfonée.

2. Dispersion selon la revendication 1, **caractérisée en ce que** du N-méthylolacrylamide est présent en tant que comonomère dans le produit de polymérisation en émulsion.

3. Dispersion selon la revendication 1 ou 2, **caractérisée en ce que** le N-méthylolacrylamide est éthérifié par un alcool en C₁₂-C₃₀.

4. Dispersion selon la revendication 3, **caractérisée en ce que** le N-méthylolacrylamide est éthérifié par un alcool tridécylique.

5. Dispersion selon l'une quelconque des revendications 1 à 4, **caractérisée en ce que** l'agent d'enrobage présente une teneur en groupes carboxy et/ou en groupes sulfo de 30 à 300 moles de groupes carboxy et/ou sulfo pour 100 kg.

6. Dispersion selon l'une quelconque des revendications 1 à 5, **caractérisée en ce que** la protéine de soja carboxylée et/ou sulfonée présente un point isoélectrique de 2 à 6, de préférence de 3 à 5.

7. Dispersion selon l'une quelconque des revendications 1 à 6, **caractérisée en ce que** la protéine de soja carboxylée et/ou sulfonée est présente sous forme soluble dans l'eau, par exemple sous forme de sel d'ammonium ou de sel de sodium.

8. Dispersion selon l'une quelconque des revendications 1 à 7, **caractérisée en ce que** l'agent d'enrobage à base de protéine de soja carboxylée et/ou sulfonée est présent en une quantité de 2 à 10 % en poids, par rapport au corps solide du produit de polymérisation en émulsion utilisé.

9. Procédé et préparation de dispersions séchées par atomisation, redispersables, selon l'une quelconque des revendications 1 à 8, **caractérisés en ce qu'**on mélange la dispersion de copolymère obtenue à partir de la polymérisation en émulsion avec une solution de la protéine de soja carboxylée et/ou sulfonée, on porte le pH du mélange au ou au voisinage du point isoélectrique et on sèche par atomisation le mélange en une poudre s'écoulant librement, à faible en teneur en poussière.

10. Utilisation des dispersions séchées par atomisation, redispersables, selon l'une quelconque des revendications 1 à 8, pour la préparation de mélanges secs pour des matières d'enduction et de revêtement ainsi que, en particulier en association avec des matières à prise hydraulique, pour la production de revêtements très flexibles, extensibles, recouvrant des fissures.
